# EUROPEAN PATENT APPLICATION

(11) **EP 3 698 911 A1**
(43) Date of publication of application: **26.08.2020**
(21) Application number: 17928980.6
(22) Date of filing: 17.10.2017
(51) Int. Cl.: B23K 26/21, B23K 31/12

(54) **WELDING SYSTEM AND OPERATION METHOD THEREOF**

(71) Applicant: LG Electronics Inc., Seoul 07336 (KR)
(72) Inventor: LEE, Kyungmin, Seoul 06772 (KR); SEO, Sanggoun, Seoul 06772 (KR); CHO, Hojae, Seoul 06772 (KR); AN, Yonggyu, Seoul 06772 (KR); HAN, Sehui, Seoul 06772 (KR); PARK, Jungsik, Seoul 06772 (KR); SEONG, Daeyong, Seoul 06772 (KR)
(74) Representative: Katérle, Axel
(86) International application number: PCT/KR2017/011465
(87) International publication number: WO 2019/078375

(57) **Abstract**

The present disclosure relates to a welding system which detects welding defects and repairs the welding defects and the welding system may include a welding machine configured to weld an object to be welded, a sensor configured to sense a weldment welded by the welding machine, and a control device configured to receive first sensing result data obtained by sensing the weldment from the sensor, to analyze the weldment based on the first sensing result data, and to transmit a repair welding command so that the welding machine performs repair welding based on the analysis result.

## Description

### [Technical Field]

The present disclosure relates to a welding system and an operation method thereof.

### [Background Art]

As a metal joining technique, welding has been applied for a long time. As a method of heating and melting a metal material and bonding the metal material to a joining portion, there are arc welding, gas welding, thermite welding, electron beam welding, laser welding, robot welding, and the like.

Welding defects may occur during welding. The welding defects may mean a phenomenon that causes shape or stress concentration as a result of welding and a portion that deteriorates the material and thus damages the strength or ductility thereof. The welding defects are affected by all conditions, such as an object to be welded, a welding rod, working conditions, or the like. For example, as the welding defects, there are defects generated in the inside of the welding metal such as angular deformation in which the welding is not straightened and an angle is formed, defects due to the placement of base materials in which the members trying to be welded are staggered to misalign, the slag winding, and the fusion defect, welding cracks, or the like.

If welding defects occur excessively, it may be difficult to achieve the purpose of use of the structure. Therefore, it is necessary to minimize the occurrence of welding defects in the welding process, and a method for repairing the welding is important in a case where a welding defect is generated.

Conventional welding systems can sense whether a welding defect occurs. However, the conventional welding system senses only whether or not a welding defect has occurred, and cannot predict or discriminate the type of the defect, and if a welding defect occurs, there is a hassle that the user has to repair the welding defect by himself.

### [Disclosure]

### [Technical Problem]

An object of the present disclosure is to provide a welding system which detects welding defects and performs repair welding of welding which are detected as defects, and an operating method thereof.

An object of the present disclosure is to provide a welding system which determines the type of welding and automatically performs repair welding defective welding if welding is defective welding, and an operating method thereof.

### [Technical Solution]

A welding system according to an embodiment of the present disclosure may include a welding machine configured to weld an object to be welded, a sensor configured to sense a weldment welded by the welding machine, and a control device configured to receive first sensing result data obtained by sensing the weldment from the sensor, to analyze the weldment based on the first sensing result data, and to transmit a repair welding command so that the welding machine performs repair welding based on the analysis result.

The control device may control the welding machine to analyze the weldment to determine a weldment type and to perform repair welding according to the weldment type.

The control device may store weldment determination data obtained by mapping a plurality of weldment types and a weldment measurement waveform and a repair welding method corresponding to each of the plurality of weldment types.

The weldment types may include a normal weldment type, and a plurality of defective weldment types which are different from each other according to welding defect.

The control device may be configured to control the welding machine to perform repair welding according to a first repair welding method if the weldment type is a first defective weldment type, and control the welding machine to perform repair welding according to a second repair welding method if the weldment type is a second defective weldment type.

The sensor may be configured to sense the repair welded weldment to transmit a second sensing result data to the control device, and the control device may be configured to analyze weldments based on the second sensing result data.

The welding machine may be a laser welding machine, the sensor may be a photodiode, and the sensing result data may include an amount of light measured in the weldment.

A control device according to an embodiment of the present disclosure may include a communication interface configured to transmit a welding command to a welding machine and receive sensing result data obtained by sensing a weldment welded according to the welding command from a sensor, an analyzer configured to analyze a weldment based on the sensing result data, and a controller configured to control the communication interface to transmit a repair welding command to the welding machine so that the welding machine performs repair welding based on the analysis result.

The controller may be configured to analyze the weldment to determine a weldment type and control the welding machine to perform repair welding according to the weldment type.

The control device may further include a memory that stores weldment determination data obtained by mapping a plurality of weldment types and a weldment measurement waveform and a repair welding method corresponding to each of the plurality of weldment types.

The control device may further include a display configured to display welding result data.

The controller may control the welding machine to end welding if the analysis result is determined as normal welding and to perform repair welding if the analysis result is determined as defective welding.

### [Advantageous Effect]

According to an embodiment of the present disclosure, since welding is performed and repair welding is performed in real-time, there is no need for an additional process for further checking the quality after welding, thereby reducing costs.

According to an embodiment of the present disclosure, by repeatedly performing repair welding until the welding defect is removed, there is an advantage that it is possible to provide a high-quality weldment in a relatively short time and to minimize leakage defects.

According to an embodiment of the present disclosure, when welding is defective welding, the type of a weldment is grasped and repair welding is performed according to each type, welding defects can be more completely removed, thereby improving reliability.

### [Description of Drawings]

Fig. 1 is a block diagram illustrating a welding system according to an embodiment of the present disclosure.
Fig. 2 is a block diagram illustrating a control device constituting the welding system illustrated in Fig. 1.
Fig. 3 is a view illustrating a method for controlling a welding system by a control device according to an embodiment of the present disclosure.
Fig. 4 is a ladder diagram illustrating a method for operating a welding system according to an embodiment of the present disclosure.
Fig. 5 is a flowchart illustrating a method for analyzing sensing result data obtained by sensing a welding result through characteristic extraction and machine learning according to an embodiment of the present disclosure.
Fig. 6 is an exemplary view illustrating weldment determination data according to an embodiment of the present disclosure.
Fig. 7a is an exemplary view illustrating a case where welding is normally performed.
Fig. 7b is a first exemplary view illustrating a case where defective welding is performed.
Fig. 7c is a second exemplary view illustrating a case where defective welding is performed.

### [Best Mode]

Hereinafter, a specific embodiment of the present disclosure will be described in detail with the accompanying drawings.

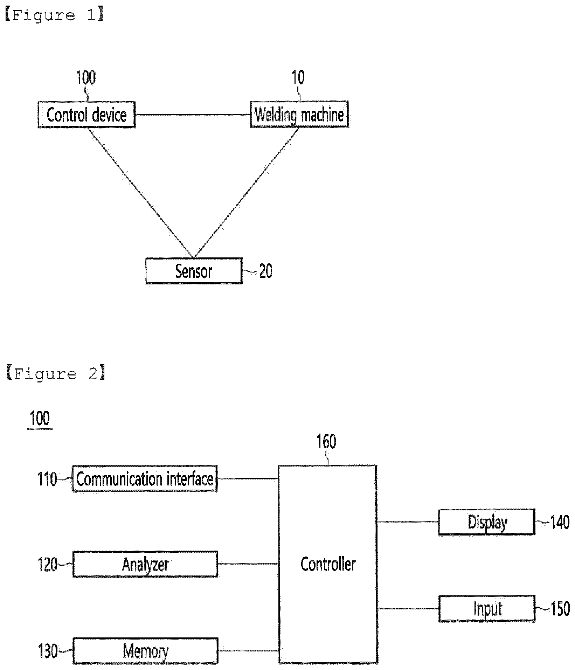

Fig. 1 is a block diagram illustrating a welding system according to an embodiment of the present disclosure.

The welding system according to an embodiment of the present disclosure may include a welding machine 10, a sensor 20, and a control device 100.

Welding is a method of joining to form a direct bond between solids by applying heat and pressure to the same or different types of metal materials.

The welding machine 10 is a device capable of welding a metal material and may include a laser welding machine, a DC arc welding machine, an AC arc welding machine, a resistance welding machine, an ultrasonic welding machine, and the like. The welding machine 10 may include various types of welding machines, such as a welding machine of a type that moves and welds along a welding region of an object to be welded, and a welding machine of a type welding through angular movement.

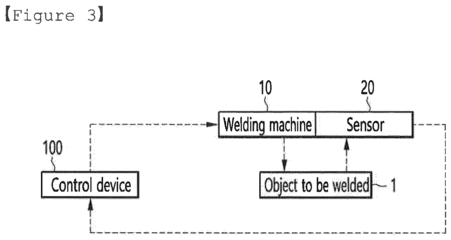

The welding machine 10 may apply heat or pressure to an object 1 to be welded (see Fig. 3). The welding machine 10 may weld a metal material by heating or pressing an object 1 to be welded.

The sensor 20 may sense the welding result of the welding machine 10. The sensor 20 may measure whether the welding is properly sensed by measuring a welded object 1 to be welded. The sensor 20 may sense a welding defect occurring in the object 1 to be welded. The sensor 20 may transmit the sensed weldment data to the control device 100. Here, the weldment data may mean data obtained by sensing a previously welded weldment.

The sensor 20 may include an optical sensor such as a photodiode, a vision sensor, a thermal image sensor, an ultrahigh-speed camera, a displacement sensor, a pressure sensor, an acceleration sensor, an acoustic sensor, or the like.

The control device 100 may control the welding machine 10 and the sensor 20. Specifically, the control device 100 may control the welding machine 10 to weld the object 1 to be welded and perform repair welding thereof. In addition, the control device 100 may receive weldment data from the sensor 20. The control device 100 may determine whether a welding defect occurs, whether repair welding is performed, or the like based on the received weldment data.

Fig. 2 is a block diagram illustrating a control device constituting the welding system illustrated in Fig. 1.

The control device 100 according to an embodiment of the present disclosure may include at least one of a communication interface 110, an analyzer 120, a memory 130, a display 140, the input 150, and the controller 160. In other words, the components listed above are merely examples for the description of the present disclosure, and, according to an embodiment, the control device 100 may omit some of the components listed above or further include additional components.

The communication interface 110 may transmit a welding command to the welding machine 10. The welding command may include a welding command for the entire object to be welded, a welding command for a portion of the object to be welded, and a repair welding command. The communication interface 110 may transmit a welding command which controls the welding machine 10 to perform welding start, welding end, or the like. The communication interface 110 may transmit a welding command including data regarding a welding method to the welding machine 10.

The communication interface 110 may transmit a sensing command which controls the sensor 20 to sense the object 1 to be welded. The sensor 20 may sense the object 1 to be welded according to a sensing command received from the communication interface 110 of the control device 100. For example, the communication interface 110 may transmit a sensing command which controls to sense the object 1 to be welded while the welding machine 10 welds the object 1 to be welded.

The communication interface 110 may receive the weldment data obtained by sensing the object 1 to be welded from the sensor 20. For example, when the sensor 20 is a photodiode, the communication interface 110 may receive weldment data including the amount of light for each region of the object 1 to be welded.

The analyzer 120 may analyze data related to the object 1 to be welded, weldment data obtained by sensing the welding result, and the like. The analyzer 120 may analyze data related to the object 1 to be welded to determine a welding method, a heat amount or pressure applied during welding, and the like. The analyzer 120 may analyze the weldment data to determine welding quality, a weldment type, whether to perform re-welding, and the like. However, the above-described determination information is merely exemplary for the explanation, and the analyzer 120 may determine and obtain information necessary for welding based on various data related to welding.

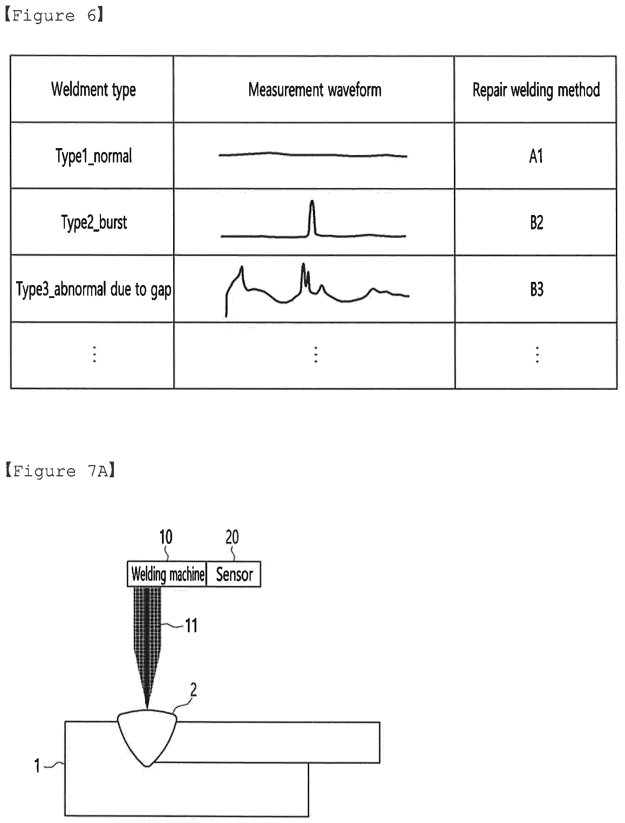

The memory 130 may store at least one or more data necessary for welding. According to an embodiment of the present disclosure, the memory 130 may store weldment determination data. Here, the weldment determination data may be data obtained by mapping a weldment type according to the weldment data sensed through the sensor 20 and a repair welding method corresponding to each weldment type. The analyzer 120 may analyze the weldment data based on the weldment determination data stored in the memory 130. In other words, the analyzer 120 may determine a weldment defective type of the weldment based on the weld determination data and obtain a repair welding method according to the determined weldment defective type. The detailed description of the weldment determination data will be described later with reference to Fig. 6.

The display 140 may display welding result data based on the weldment data. Here, the welding result data may mean data related to a previously completed weldment. For example, the welding result data may include at least one of an image of a weldment in which welding is performed, welding quality, a weldment type, and a repair welding method.

The input 150 may receive an input command related to welding. The user may input a command related to welding through the input 150. For example, the input 150 may receive a start/end command for welding, a command for selecting a welding method, an execution command for repair welding, and the like.

The controller 160 may control the overall operation of the control device 100. The controller 160 may control each component constituting the control device 100. In other words, the controller 160 may control the communication interface 110, the analyzer 120, the memory 130, the display 140, and the input 150.

In addition, the controller 160 may control the communication interface 110 to control the welding system. In other words, the controller 160 may control the welding machine 10 and the sensor 20 through the communication interface 110.

Next, Fig. 3 is a view illustrating a method for controlling a welding system by a control device according to an embodiment of the present disclosure.

First, the control device 100 may transmit a welding command which controls to weld the object 1 to be welded to the welding machine 10 and transmit a sensing command which controls to sense the weldment to the sensor 20. At this time, the weldment may mean a portion or all of the object 1 to be welded on which welding is performed.

The sensor 20 may be positioned adjacent to the welding machine 10 to sense the weldment in near real-time. For example, when the welding machine 10 is a laser welding machine, the sensor 20 may be located at the head of the laser welding machine. However, since this is only an example, it is reasonable that the location of the sensor 20 is not limited.

The welding machine 10 may be welded by heating or pressing the object 1 to be welded according to a welding command received from the control device 100.

The sensor 20 may sense a weldment according to a sensing command received from the control device 100. For example, the sensing command may be a command for sensing the welding result in real-time. In this case, the sensor 20 may sense in real-time along the welding region welded by the welding machine 10.

The sensor 20 may transmit weldment data obtained by sensing the weldment to the control device 100. The control device 100 may receive the weldment data and monitor and analyze the welding results. The control device 100 may transmit a repair welding command to the welding machine 10 according to the analysis result.

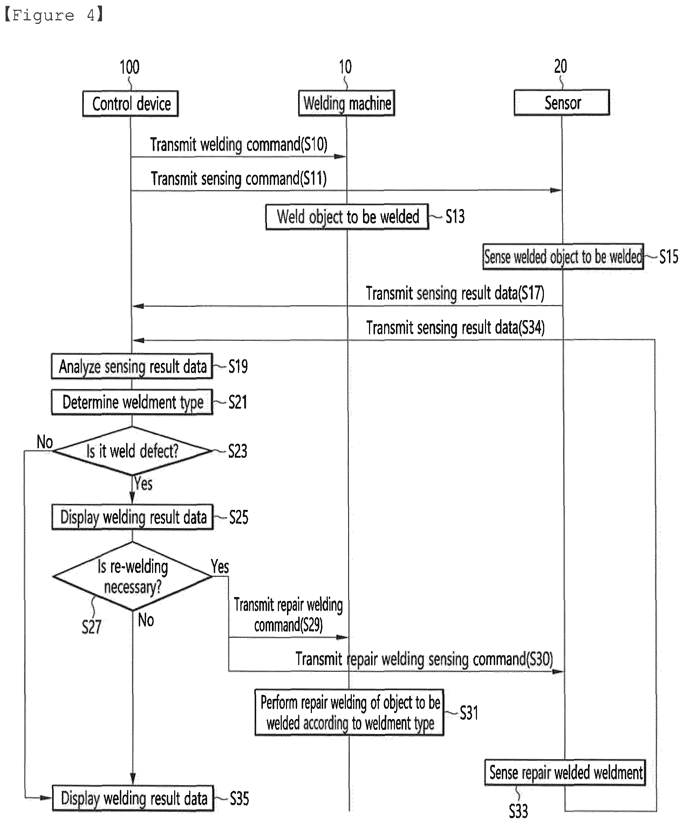

Fig. 4 is a ladder diagram illustrating a method for operating a welding system according to an embodiment of the present disclosure.

The communication interface 110 of the control device 100 may transmit a welding command to the welding machine 10 (S10). The welding command is the same as described above.

The communication interface 110 of the control device 100 may transmit a sensing command to the sensor 20 (S11). The sensing command is also the same as described above.

The welding machine 10 may weld the object 1 to be welded according to a welding command (S13).

The welding machine 10 may weld all or a portion of the object 1 to be welded by a welding command. Meanwhile, the order of step S11 in which the control device 100 transmits a sensing command to the sensor 20 and step S13 in which the welding machine 10 welds an object to be welded may be changed.

The sensor 20 may sense the welded weldment according to the received sensing command (S15).

According to one embodiment, the sensor 20 may sense the weldment while the welding machine 10 welds the object 1 to be welded. In other words, the sensor 20 may immediately sense a region of the object 1 to be welded which is performing welding or a region of the object 1 to be welded in which welding is performed, to sense the weldment in near real-time.

According to another embodiment, the sensor 20 may sense a weldment after the welding machine 10 completes welding.

The sensor 20 may sense the weldment in real-time based on the data included in the sensing command or may sense the weldment after welding is completed.

The sensor 20 may obtain sensing result data as the object to be welded is sensed. For example, the sensor 20 may be a photodiode sensor, and the photodiode sensor may obtain sensing result data including light amount information for a weldment.

The sensor 20 may transmit the obtained sensing result data to the control device 100 (S17).

The communication interface 110 of the control device 100 may receive sensing result data from the sensor 20. The controller 160 may analyze the received sensing result data (S19).

According to an embodiment, the controller 160 of the control device 100 may output the measurement waveform and analyze the sensing result data. For example, the sensing result data may include light amount information, and the light amount information may be an analog signal indicating the light amount. The analyzer 120 of the control device 100 may convert an analog signal representing light amount information into a digital signal, and then output a measurement waveform based on the converted digital signal. The controller 160 of the control device 100 may analyze the welding result based on the output measurement waveform.

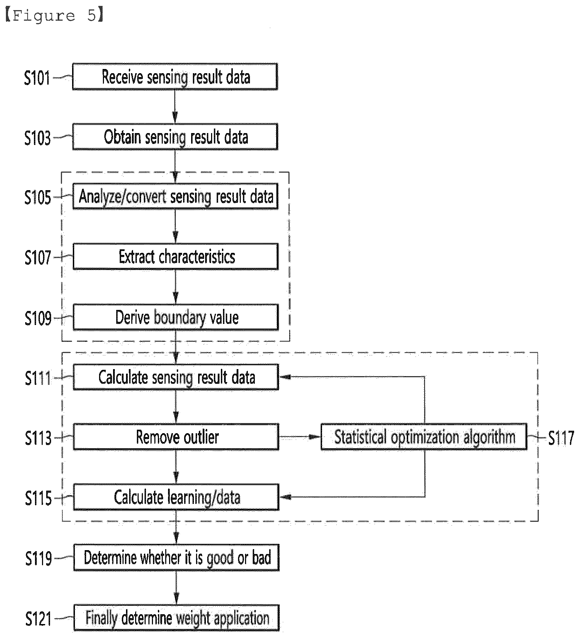

According to another embodiment, the controller 160 of the control device 100 may analyze the sensing result data through characteristic extraction and machine learning. Next, referring to Fig. 5, a method of analyzing sensing result data obtained by sensing a welding result through characteristic extraction and machine learning according to an embodiment of the present disclosure will be described.

Fig. 5 is a flowchart illustrating a method for analyzing sensing result data obtained by sensing a welding result through characteristic extraction and machine learning according to an embodiment of the present disclosure.

The communication interface 110 of the control device 100 may receive the sensing result data (S101).

The analyzer 120 of the control device 100 may obtain the sensing result data through the communication interface 110 (S103).

The analyzer 120 may analyze/convert the sensing result data (S105).

For example, the analyzer 120 may convert an analog signal representing the light amount into a digital signal and output a measurement waveform.

The analyzer 120 may extract characteristics of the analyzed/converted data (S107) and derive a boundary value (S109).

Steps S105 to S109 are methods for extracting the characteristics of the sensing result data and are also applicable to the embodiment of outputting the measurement waveform described above.

The analyzer 120 may calculate the sensing result data (Sill).

The analyzer 120 may remove the outlier from the calculated sensing result data (S113).

The analyzer 120 may remove the outliers from the calculated sensing result data and learn/calculate the data with the outliers removed (S115).

In addition, the analyzer 120 may apply the data with the outliers removed to the statistical optimization algorithm (S117). After applying to the statistical optimization algorithm, the analyzer 120 may calculate the sensing result data again (Sill) and repeat the step of removing outliers. In addition, the analyzer 120 may learn/compute data after applying a statistical optimization algorithm (S115).

Steps Sill to S117 are methods for statistically optimizing to accumulate previously extracted characteristics to improve the reliability of sensing result data analysis.

The analyzer 120 may determine whether it is good or bad based on the calculated data (S119).

In other words, the analyzer 120 may determine the quality of the sensing result based on the calculated data.

The analyzer 120 may finally determine by applying weight (S121).

The analyzer 120 may analyze the sensing result data in a method as illustrated in Fig. 5. However, since the method illustrated in Fig. 5 is merely exemplary, the method needs not to be limited thereto.

Again, Fig. 4 will be described.

The analyzer 120 may determine the weldment type based on the analysis result of the sensing result data (S21).

The control device 100 may obtain the shape and size of a welding defect or the like as a result of analyzing the sensing result data and may obtain a weldment type.

Here, the weld type may include a type indicating a normal weldment in which the welding is normally performed, and a type indicating a defective weldment in which the welding is abnormally performed, and the type representing a defective weldment may include at least one defective weldment type which is different according to the welding defect.

The analyzer 120 may determine whether the weldment welded by the welding machine 10 is a normal weldment or a defective weldment based on the analysis result of the sensing result data, and determine what kind of defective weldment in a case of a defective weldment.

Here, the defective weldment may indicate a weldment in which at least one welding defect is generated as a result of welding to an object to be welded. At this time, the types of welding defects generated in the defective weldment may vary. For example, the weldment may be welded abnormally as a burst occurs, or a gap may be generated and the weldment may be welded abnormally. However, this is merely exemplary, and the causes of abnormal welding may vary.

According to the type of welding defect, the shape, the size, or the like of the weldment may be different. Therefore, it is advantageous to improve the reliability since welding defects can be more completely eliminated if the type of the defective weldment is grasped and repair welding is performed according to each type.

The analyzer 120 may determine the weldment type by obtaining data obtained by matching the analysis result of the sensing result data from the weldment determination data stored in the memory 130.

Next, referring to Figs. 6 and 7a to 7c, a method for determining weldment determination data and a weldment type will be described.

Fig. 6 is an exemplary view illustrating weldment determination data according to an embodiment of the present disclosure.

The memory 130 may store weldment determination data. The weldment determination data may include data obtained by mapping the weldment type, a measurement waveform, and a repair welding method.

Referring to the example illustrated in Fig. 6, when welding is performed normally, the weldment type indicates Type 1, the measurement waveform illustrates a relatively uniform size, and the repair welding method may be A1. When welding is performed abnormally by bursting, the weldment type indicates Type 2, the measurement waveform indicates a relatively uniform size and then indicates a peak at a point, and the repair welding method may be B2. When welding is performed abnormally due to a gap, the weldment type indicates Type 3, the measurement waveform indicates a non-uniform size, and the repair welding method may be B3.

At this time, each of the repair welding methods A1, B1, and B2 may be a defect removal method according to each defect cause. The mapped repair welding method and the weldment type indicating a normally welded case may be a method that does not perform repair welding.

Meanwhile, the expressions of Type 1, Type 2, Type 3, and the like indicating the weldment type, and A1, B2, B3, and the like indicating the repair welding method are merely illustrative for convenience of explanation, and the weldment determination data can be expressed as each type of the weldment and each of the repair welding methods in various ways.

Similarly, the measurement waveform may be different from the example illustrated in Fig. 6 according to the type of the welding machine 10 and the sensor 20. The measurement waveform illustrated in Fig. 6 is merely an example of the measurement waveform when the welding machine 10 is a laser welding machine and the sensor 20 is a photodiode sensor.

Specifically, Fig. 7a is an exemplary view illustrating a case where welding is normally performed.

The welding machine 10 may apply heat or pressure to the object 1 to be welded. Reference numeral 11 indicates a visualization of heat or pressure applied by the welding machine 10. If the welding machine 10 is a laser welding machine, reference numeral 11 may indicate a laser beam. When heat or pressure applied by the welding machine 10 forms a stable molten pool 2, welding may be normally performed. Therefore, when normal welding is performed, since the molten pool 2 is stably formed and the amount of light measured by the sensor 20 is constant, the measurement waveform may indicate a uniform size.

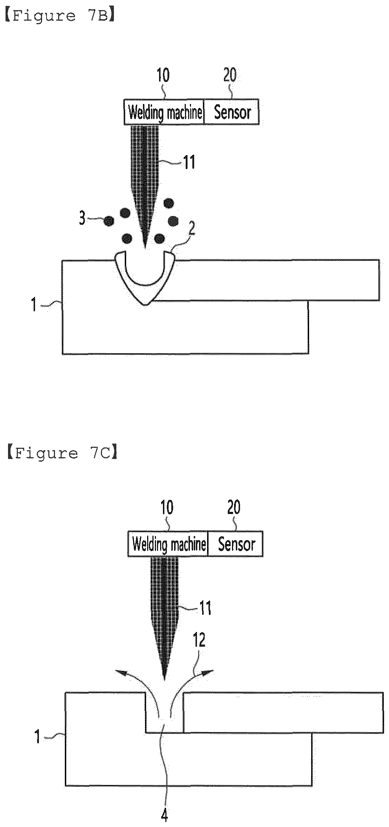

Fig. 7b is a first exemplary view illustrating a case where welding is performed abnormally.

A burst may occur due to heat or pressure applied by the welding machine 10. When the burst occurs, a large amount of spatter 3 is generated, and abnormal welding may be performed. Here, the spatter 3 may represent slags or metal particles scattered during welding. Therefore, when welding is performed abnormally due to bursting, the surface area of the light amount measurement object increases due to a large amount of spatters 3, and the distance between the spatters 3 and the sensors 2 decreases, so that the amount of light measured by the sensor 2 can relatively increase. In this case, the amount of light measured by the sensor 2 may indicate a uniform size and suddenly increase at the point where the burst occurs.

Fig. 7c is a second exemplary view illustrating a case where welding is performed abnormally.

A gap 4 may be generated in the object 1 to be welded to weld. When welding is performed abnormally due to the gap 4, the irradiated laser beam may be scattered, and reference numeral 12 may indicate the scattered beam. Therefore, when the welding is performed abnormally due to the gap, a signal size difference due to a change in the welding distance may occur, and a large number of signal peaks may occur due to the scattering of the beam. In this case, the amount of light measured by the sensor 2 has a large number of peaks and may indicate a non-uniform size.

As described above, the control device 100 according to an embodiment of the present disclosure may store a measurement waveform according to a cause of a defect, and a weldment type and a repair welding method corresponding to each measurement waveform. The control device 100 may analyze the sensing result data to determine the type of the weldment, and the sensing result data may be a measurement waveform obtained by analyzing the sensing result data received from the sensor 20. According to an embodiment, the measurement waveform may indicate the amount of light.

Again, Fig. 4 will be described.

The controller 160 of the control device 100 may determine whether the welding is defective (S23).

As a result of determining the weldment type, the controller 160 may determine whether the weldment is a normal weldment or a defective weldment. The controller 160 may determine that if the welding type is normal, the weldment is normal welding, and if the welding type is abnormal, the weldment is welding defect.

In a case of normal welding, the controller 160 may display welding result data (S33). Alternatively, the controller 160 may end welding in a case of normal welding. According to an embodiment, the step of displaying the welding result data may be omitted.

If the welding is defective, the controller 160 may display welding result data (S25).

Here, the welding result data is the same as described above. The display 140 may display at least one of an image of the weldment in which the welding is performed, welding quality, a welded type, and a repair welding method.

According to an embodiment, as illustrated in Fig. 4, the controller 160 may display welding result data before performing repair welding and also display welding result data after performing repair welding.

According to another embodiment, the controller 160 may display the welding result data only after performing the repair welding, by omitting the step of displaying the welding result data before performing repair welding.

The controller 160 may determine whether re-welding is necessary (S27).

According to an embodiment, the controller 160 may automatically determine whether re-welding is necessary based on the type of the weldment. For example, the controller 160 may determine that re-welding is necessary when the weldment type is abnormal welding.

According to another embodiment, the controller 160 may receive a repair welding execution command through the input 150 and determine whether re-welding is necessary according to the repair welding execution command. For example, the controller 170 may determine that re-welding is necessary when the input 150 receives a repair welding execution command and may determine that re-welding is not necessary when the repair welding execution command is not received.

If it is determined that re-welding is not necessary, the controller 160 may display the welding result data (S33).

If it is determined that re-welding is necessary, the controller 160 may transmit a repair welding command to the welding machine 10 (S29) and transmit a repair welding sensing command to the sensor 20.

The welding machine 10 may perform repair welding of the object to be welded according to the weldment type (S31).

Next, a method for performing repair welding by the welding machine 10 according to various embodiments of the present disclosure will be described.

According to the first embodiment of the present disclosure, the welding machine 10 may perform repair welding based on a pre-stored database. For example, the welding machine 10 may perform repair welding by obtaining a repair welding method corresponding to a weldment type based on the weldment determination data as described above. In other words, the control device 100 transmits a repair welding method that maps to a weldment type based on the weldment determination data to the welding machine 10, and the welding machine 10 can perform repair welding according to the received repair welding method. Alternatively, since the database for the repair welding method is stored in the welding machine 10, the repair welding method corresponding to the received weldment type can be obtained from the pre-stored database to perform repair welding.

According to the second embodiment of the present disclosure, the welding machine 10 may repair and weld the weld defective region while re-welding the entire weldment. As described above, in a case where the welding machine performs repair welding while re-welding the entire weldment, the welding machine 10 can also repair small welding defects together, thereby further improving the quality of the entire weldment.

According to the third embodiment of the present disclosure, the welding machine 10 may perform repair welding of only a partial region corresponding to a welding defect. The welding machine 10 may obtain the size, the location information, and the like of a welding defect from the control device 100. The welding command received from the control device 100 may include size, location information, and the like of a welding defect. The welding machine 10 may perform repair welding so that only the welding defect is removed, based on the obtained size and location information of the welding defect. At this time, the welding machine 10 can perform repair welding of only the location of the welding defect. Alternatively, the welding machine 10 may perform repair welding of a predetermined region including the location of the welding defect. For example, the welding machine 10 may perform repair welding up to +/-1 mm region of the location of the welding defect.

The welding machine 10 may perform repair welding according to any one of the various embodiments described above.

The sensor 20 may sense the repair welded weldment (S33) .

A method for sensing the repair welded weldment may be the same as the method for sensing the welded weldment described in step S15.

The sensor 20 may transmit sensing result data obtained by sensing for repair welding to the control device 100 (S34).

The control device 100 may repeat steps S19 to S35 described above.

The welding system according to an embodiment of the present disclosure can repeatedly perform repair welding when welding defects occur while performing welding, thereby providing a high-quality weldment in a short time and minimizing leakage defects.

In addition, the welding system according to an embodiment of the present disclosure has the advantage of performing repair welding in real-time while performing welding. Accordingly, there is no need for an additional process to check the quality after welding, and there is an effect of cost reduction due to reduced investment cost.

In addition, the welding system according to an embodiment of the present disclosure not only performs quality determination and repair welding by using the existing database, but also can additionally secure and learn mass production data, and thus there is an advantage that initial defect leakage is prevented, monitoring hit ratio through learning increases, and reliability is improved.

As described above, the welding system according to the embodiment of the present disclosure can be applied to laser welding of Al and Cu materials for electric vehicle batteries, manufacturing methods such as different combinations such as Al and Cu, Al compression, and Al die casting is also applied to welding by different combinations and thus welding defect can be detected and repair welding through feedback control can be performed.

According to an embodiment of the present disclosure, it is possible to implement the above-described method as code readable by a processor on a medium on which a program is recorded. Examples of the medium readable by the processor include ROM, RAM, CD-ROM, magnetic tape, floppy disk, and optical data storage device.

The above description is merely illustrative of the technical idea of the present disclosure, and those skilled in the art to which the present disclosure pertains may make various modifications and variations without departing from the essential characteristics of the present disclosure. The welding system described above is not limited to the configuration and method of the above-described embodiments, and the above-described embodiments may be configured by selectively combining all or part of each embodiment so that various modifications can be made.

Therefore, the embodiments disclosed in the present disclosure are not intended to limit the technical spirit of the present disclosure, but to explain, and the scope of the technical spirit of the present disclosure is not limited by these embodiments.

The scope of protection of the present disclosure should be interpreted by the claims below, and all technical spirits within the scope equivalent thereto should be interpreted as being included in the scope of the present disclosure.

## Claims

1. A welding system comprising:
a welding machine configured to weld an object to be welded;
a sensor configured to sense a weldment welded by the welding machine; and
a control device configured to receive first sensing result data obtained by sensing the weldment from the sensor, to analyze the weldment based on the first sensing result data, and to transmit a repair welding command so that the welding machine performs repair welding based on the analysis result.

2. The welding system of claim 1,
wherein the control device controls the welding machine to analyze the weldment to determine a weldment type and to perform repair welding according to the weldment type.

3. The welding system of claim 2,
wherein the control device stores weldment determination data obtained by mapping a plurality of weldment types and a weldment measurement waveform and a repair welding method corresponding to each of the plurality of weldment types.

4. The welding system of claim 2,
wherein the weldment types include
a normal weldment type, and
a plurality of defective weldment types which are different from each other according to welding defect.

5. The welding system of claim 4,
wherein the control device is configured to
control the welding machine to perform repair welding according to a first repair welding method if the weldment type is a first defective weldment type, and
control the welding machine to perform repair welding according to a second repair welding method if the weldment type is a second defective weldment type.

6. The welding system of claim 2,
wherein the sensor is configured to sense the repair welded weldment to transmit a second sensing result data to the control device, and
wherein the control device is configured to analyze weldments based on the second sensing result data.

7. The welding system of claim 1,
wherein the welding machine is a laser welding machine,
wherein the sensor is a photodiode, and
wherein the sensing result data includes an amount of light measured in the weldment.

8. A control device comprising:
a communication interface configured to transmit a welding command to a welding machine and receive sensing result data obtained by sensing a weldment welded according to the welding command from a sensor;
an analyzer configured to analyze a weldment based on the sensing result data; and
a controller configured to control the communication interface to transmit a repair welding command to the welding machine so that the welding machine performs repair welding based on the analysis result.

9. The control device of claim 8,
wherein the controller is configured to
analyze the weldment to determine a weldment type, and
control the welding machine to perform repair welding according to the weldment type.

10. The control device of claim 8, further comprising:
a memory that stores weldment determination data obtained by mapping a plurality of weldment types and a weldment measurement waveform and a repair welding method corresponding to each of the plurality of weldment types.

11. The control device of claim 8, further comprising:
a display configured to display welding result data.

12. The control device of claim 8,
wherein the controller controls the welding machine to end welding if the analysis result is determined as normal welding and to perform repair welding if the analysis result is determined as defective welding.
